# EUROPEAN PATENT SPECIFICATION

(11) **EP 4 574 487 B1**
(45) Date of publication and mention of the grant of the patent: **22.04.2026**
(21) Application number: 24213850.1
(22) Date of filing: 19.11.2024
(51) Int. Cl.: B60K 1/00

(54) **BATTERY ELECTRIC VEHICLE**
BATTERIEELEKTROFAHRZEUG
VÉHICULE ÉLECTRIQUE À BATTERIE

(30) Priority: 20.12.2023 JP 2023214554
(43) Date of publication of application: 25.06.2025
(73) Proprietor: TOYOTA JIDOSHA KABUSHIKI KAISHA, Aichi-ken, 471-8571 (JP)
(72) Inventor: MIYAKE, Takayuki, Aichi, 448-8650 (JP)
(74) Representative: D Young & Co LLP

(56) References cited:
- WO-A1-2017/114422
- WO-A1-2022/108444
- WO-A1-2023/048826
- CN-A- 117 246 071
- JP-A- 2005 104 329
- JP-A- 2015 063 249
- US-A1- 2021 162 848

## Description

### BACKGROUND OF THE INVENTION

### 1. Field of the Invention

The technology disclosed in the present specification relates to a battery electric vehicle. The "battery electric vehicle" in the present specification is also called an electrified vehicle, and includes a hybrid electric vehicle including both a motor and an engine, and a fuel cell electric vehicle.

### 2. Description of Related Art

In battery electric vehicles disclosed in Japanese Unexamined Patent Application Publication No. 2016-168955, Japanese Unexamined Patent Application Publication No. 2015-63249, and Japanese Unexamined Patent Application Publication No. 2005-104329, a motor that drives an axle is supported by a suspension together with the axle. Meanwhile, an inverter that supplies alternating-current power to the motor is fixed to a chassis. That is, during traveling, the motor is swung by the suspension, relative to the inverter. A battery electric vehicle according to the preamble of claim 1 is known from WO 2023/048826 A1.

### SUMMARY OF THE INVENTION

The inverter and the motor are electrically connected by a power cable. When the motor swings relative to the inverter, the power cable also swings. When a part of the power cable swings greatly, fatigue degradation of the part occurs. The present specification provides a technology that restrains the swinging of the power cable that connects the motor and the inverter, in the battery electric vehicle in which the motor is supported by the suspension.

An aspect of the present disclosure relates to a battery electric vehicle including an axle, a motor, a suspension, an inverter, a power cable, and a support bracket. The axle extends in a vehicle-width direction. The motor is coupled to the axle, and is configured to drive the axle. The suspension supports the axle and the motor, and is configured to cause the axle and the motor to swing along a circular arc when viewed in the vehicle-width direction. The inverter is fixed to a chassis, and is configured to supply electric power to the motor. The power cable connects the inverter and the motor. The support bracket supports the power cable, and is configured to swing together with the motor. Moreover, the power cable is supported by the support bracket, at a position that is closer to the center of the circular arc than a position of half of the radius of the circular arc is when viewed in the vehicle-width direction.

In the battery electric vehicle in the aspect of the present disclosure, the swinging amplitude of the support spot of the power cable is equal to or less than half of the swinging amplitude of the motor. The swinging of the power cable is divided into the swinging of the portion between the inverter and the support spot and the swinging of the portion between the support spot and the motor. As a result, the swinging of the power cable is restrained.

In the battery electric vehicle in the aspect of the present disclosure, the center of the circular arc may be a coupling point of the suspension to the chassis. The battery electric vehicle having the above configuration may further include a trailing arm that couples the axle and the suspension. Moreover, a point where the trailing arm is coupled to the suspension may coincide with the coupling point. Alternatively, the battery electric vehicle having the above configuration may further include a leaf spring that couples the suspension and the chassis, the leaf spring being constituted by a plurality of laminated plates having elasticity. Moreover, a point where the leaf spring is coupled to the suspension may coincide with the coupling point. Further, in the battery electric vehicle having the above configuration, the support bracket may extend from the motor toward the center of the circular arc when the chassis is viewed in the vehicle-width direction.

In the battery electric vehicle in the aspect of the present disclosure, the power cable may extend in the vehicle-width direction between the support bracket and the inverter, may be orthogonally bent at the support bracket, and may extend in a chassis front-rear direction between the support bracket and the motor.

Details and further improvements of the technology disclosed in the present specification will be described in "DETAILED DESCRIPTION OF EMBODIMENTS" described later.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view of a rear portion of a battery electric vehicle in a first embodiment as an example of the present invention;
FIG. 2 is a sectional view of the battery electric vehicle taken along line II-II in FIG. 1;
FIG. 3 is a diagram showing the displacement of a motor when an axle of the battery electric vehicle shown in FIG. 1 swings;
FIG. 4 is a sectional view of a rear portion of a battery electric vehicle in a second embodiment as an example of the present invention; and
FIG. 5 is a diagram showing the displacement of a motor when an axle of the battery electric vehicle shown in FIG. 4 swings.

### DETAILED DESCRIPTION OF EMBODIMENTS

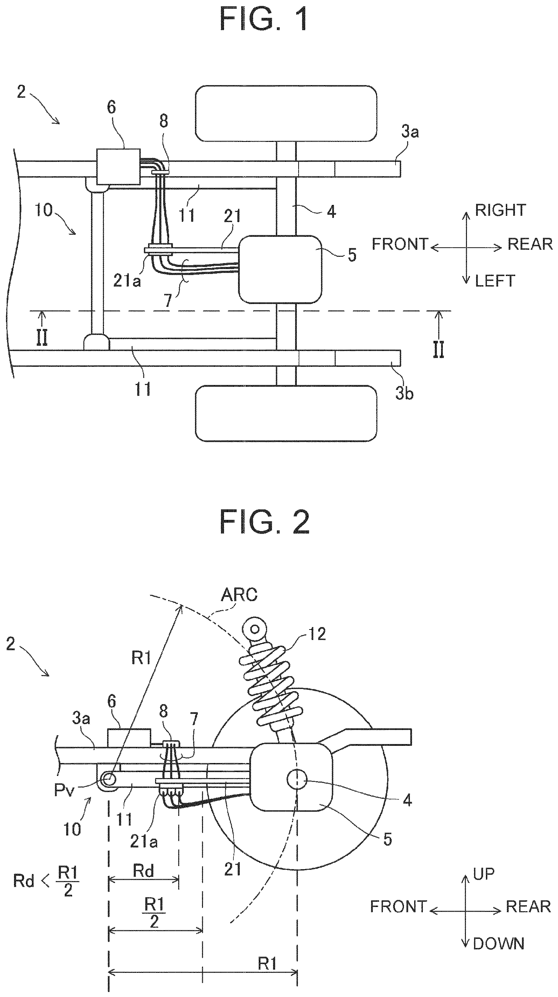

A battery electric vehicle 2 in a first embodiment will be described with reference to FIG. 1 to FIG. 3. FIG. 1 is a plan view of a rear portion of the battery electric vehicle 2, and FIG. 2 is a sectional view of the battery electric vehicle 2 taken along line II-II in FIG. 1. FIG. 1 and FIG. 2 show only components around a suspension 10 of the battery electric vehicle 2.

A chassis in the first embodiment means a frame (or a panel constituting a frame) of a vehicle. Rear side members 3a, 3b are parts of the chassis. The battery electric vehicle 2 includes a motor 5, and the motor 5 drives an axle 4 for rear wheels. The motor 5 is integral with the axle 4. The motor 5 may include a reduction gear or a differential gear.

The axle 4 and the motor 5 are coupled to the rear side members 3a, 3b (the chassis) through a suspension 10. The suspension 10 includes a trailing arm 11 and a strut 12. In FIG. 1, the strut 12 is not illustrated. The strut 12 includes a coil spring and a damper. A lower end of the strut 12 is coupled to the axle 4, and an upper end of the strut 12 is coupled to an upper end of a suspension tower provided on a body of the battery electric vehicle 2. In FIG. 1 to FIG. 3, the body including the suspension tower is not illustrated.

The trailing arm 11 is supported by the rear side members 3a, 3b, at a pivot Pv provided forward of the axle 4, in a rotatable manner. The pivot Pv corresponds to a coupling point of the suspension 10 (the trailing arm 11) to the chassis (the rear side members 3a, 3b). The axle 4 and the motor 5 swing around the pivot Pv along a circular arc ARC, when viewed in a vehicle-width direction.

An inverter 6 that supplies alternating-current power to the motor 5 is fixed to the rear side member 3a. The inverter 6 and the motor 5 are connected by three power cables 7. Between the inverter 6 and the motor 5, the three power cables 7 are supported by a fixation base 8 and a support bracket 21. The fixation base 8 is fixed to the rear side member 3a. The power cables 7 that extend from the inverter 6 are fixed to the fixation base 8. The support bracket 21 extends from the motor 5 in a vehicle forward direction, and the three power cables 7 are supported by a support portion 21a provided at a distal end of the support bracket 21.

The power cables 7 extend in the vehicle-width direction between the fixation base 8 and the support bracket 21 (the support portion 21a), are orthogonally bent at the support bracket 21 (the support portion 21a), and extend in a front-rear direction of the chassis between the support bracket 21 (the support portion 21a) and the motor 5.

The three power cables 7 are supported by the support bracket 21, at a position that is closer to the center (that is, the pivot Pv) of the circular arc ARC than a position of half (R1/2) of a radius R1 of the circular arc ARC is. In other words, a distance Rd from the support spot of the power cables 7 to the pivot Pv is shorter than R1/2. The support spot is positioned between the pivot Pv and the motor 5.

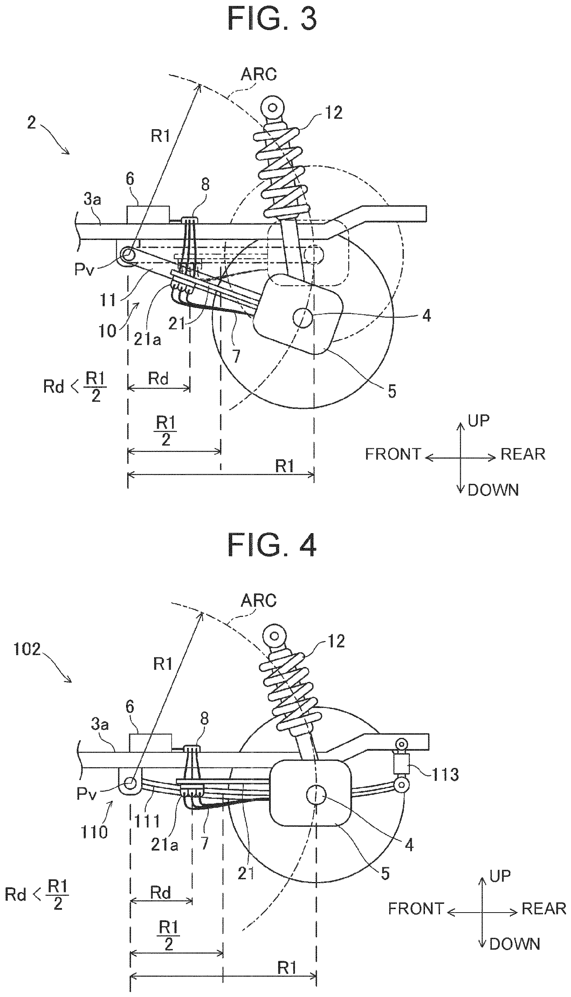

When the battery electric vehicle 2 travels, the spring of the strut 12 expands and contracts depending on the concavity and convexity of a road surface, and the axle 4 and the motor 5 swing relative to the chassis (the rear side members 3a, 3b). The axle 4 and the motor 5 swing around the pivot Pv along the circular arc ARC. The motor 5 swings relative to the inverter 6. FIG. 3 shows the displacement of the motor 5 when the axle 4 swings. The motor 5 and the inverter 6 are connected by the power cables 7, so that the power cables 7 also swing. The support bracket 21 swings together with the motor 5. The power cables 7 are supported by the support bracket 21 at the position that is closer to the pivot Pv than the position of half of the radius R1 of the circular arc ARC is. Therefore, the swinging amplitude of the support spot (the support portion 21a) of the power cables 7 is smaller than half of the swinging amplitude of the motor 5. When the above structure is employed, the swinging of the power cables 7 is divided into the swinging of the portion between the fixation base 8 and the support spot and the swinging of the portion between the support spot and the motor 5. Moreover, the support spot (the support portion 21a of the support bracket 21) swings together with the motor 5, and therefore, the swinging amplitude of the portion between the support spot of the power cables 7 and the motor 5 is small. When the above structure is employed, the vibration of the power cable 7 is restrained.

Further, the power cables 7 are fixed to the fixation base 8. In other words, the power cables 7 are fixed to the chassis (the rear side member 3a) by the fixation base 8. The fixation base 8 can be expressed as the fixation spot of the power cables 7 on the chassis side. Between the fixation spot (the fixation base 8) on the chassis side and the support spot (the support portion 21a of the support bracket 21) on the motor side, the power cables 7 swing mainly along a plane (a first plane) orthogonal to the chassis front-rear direction. The power cables 7 are orthogonally bent at the support spot. Between the support spot and the motor 5, the power cables 7 swing mainly along a plane (a second plane) orthogonal to the vehicle-width direction. The swinging of the power cables 7 is divided into the swinging in the first plane and the swinging in the second plane. This also contributes to the restraint of the vibration of the power cables 7.

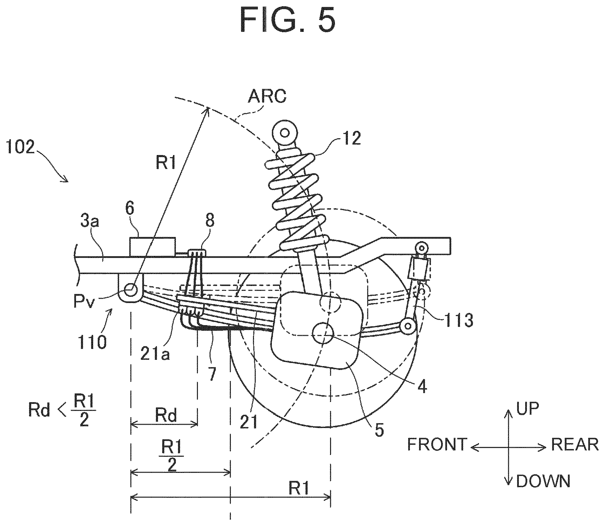

A battery electric vehicle 102 in a second embodiment will be described with reference to FIG. 4 and FIG. 5. FIG. 4 is a sectional view of the battery electric vehicle 102. FIG. 4 corresponds to FIG. 2. The battery electric vehicle 102 in the second embodiment is different from the battery electric vehicle 2 in the first embodiment, in the structure of a suspension 110. The suspension 110 includes a leaf spring 111, the strut 12, and a sub-damper 113. The leaf spring 111 is constituted by a plurality of laminated plates having elasticity. The strut 12 is the same as that in the first embodiment. A front end of the leaf spring 111 is supported by the rear side member 3a, at the pivot Pv, in a rotatable manner. The pivot Pv corresponds to a coupling point of the suspension 110 (the leaf spring 111) to the chassis (the rear side member 3a). A rear end of the leaf spring 111 is coupled to a lower end of the sub-damper 113. An upper end of the sub-damper 113 is coupled to the rear side member 3a. The strut 12 includes the coil spring and the main-damper, and the sub-damper 113 serves as an auxiliary damper.

The axle 4 and the motor 5 are supported by the chassis (the rear side member 3a) through the suspension 110. The axle 4 and the motor 5 are coupled to the lower end of the strut 12, and are attached to a middle of the leaf spring 111. The upper end of the strut 12 is coupled to the body (not illustrated) in a rotatable manner, and the lower end of the strut 12 is coupled to the axle 4 in a rotatable manner.

During the traveling of the battery electric vehicle 102, depending on the concavity and convexity of the road surface, the leaf spring 111 deforms, and the strut 12 and the sub-damper 113 expand and contract. FIG. 5 shows the displacement of the motor 5 when the axle swings. The front end of the leaf spring 111 is supported at the pivot Pv, in a rotatable manner. The rear end of the leaf spring 111 is supported by the sub-damper 113 that expands and contracts, in a rotatable manner. The rear end of the leaf spring 111 moves up and down depending on the expansion and contraction of the sub-damper 113. More precisely, as shown in FIG. 5, the rear end of the leaf spring 111 moves between an upper rear portion and a lower front portion. Therefore, the axle 4 and the motor 5 that are attached to the leaf spring 111 swing roughly along the circular arc ARC around the pivot Pv. That is, the swinging direction of the axle 4 and the motor 5 is the same as that in the battery electric vehicle 2 in the first embodiment. The dispositions of the inverter 6, the fixation base 8, the support bracket 21, and the power cable 7 are the same as those in the battery electric vehicle 2 in the first embodiment. Therefore, the battery electric vehicle 102 in the second embodiment exerts the same effect as the battery electric vehicle 2 in the first embodiment.

Characteristics of the battery electric vehicles 2, 102 will be enumerated. The axle 4 and the motor 5 are supported by the suspension 10 (110), and swing along the circular arc ARC around the pivot Pv during traveling. The support bracket 21 extends from the motor 5 in the direction of the front of the chassis, and the support bracket 21 swings together with the motor 5. The power cables 7 are supported by the support bracket. The power cables 7 are supported by the support bracket 21, at the position that is closer to the center (the pivot Pv) of the circular arc ARC than the position of half (R1/2) of the radius of the circular arc ARC is when viewed in the vehicle-width direction. By this structure, the vibration of the power cables 7 during traveling is restrained.

As described above, the center (the pivot Pv) of the swinging of the axle 4 and the motor 5 is the coupling point of the suspension 10 (110) to the chassis. The power cables 7 are fixed to the fixation base 8 on the chassis (the rear side member 3a). The power cables 7 extend in the vehicle-width direction between the fixation spot (the fixation base 8) on the chassis side and the support spot (the support portion 21a of the support bracket 21) on the motor side, are orthogonally bent at the support spot, and extend in the chassis front-rear direction between the support spot and the motor 5. By this structure, the vibration of the power cables 7 is divided into two vibrations. This also contributes to the restraint of the vibration of the power cables 7. The power cables 7 extend in the vehicle-width direction between the fixation spot (the fixation base 8) and the support spot (the support portion 21a of the support bracket 21). In other words, the fixation spot (the fixation base 8) of the power cables 7 on the chassis side and the support spot (the support portion 21a of the support bracket 21) on the motor side are disposed at same position in the chassis front-rear direction.

Attention points relevant to the technology described in the embodiments will be described. In the battery electric vehicle 2 in the first embodiment, the trailing arm 11 of the suspension 10 swings around the pivot Pv. In the battery electric vehicle 102 in the second embodiment, the leaf spring 111 swings roughly around the pivot Pv. The technology disclosed in the present specification is not limited to the trailing-arm suspension and the leaf-spring suspension. The technology disclosed in the present specification can be applied to a battery electric vehicle including a suspension in which the axle and the motor swing along the circular arc ARC around the pivot Pv when viewed in the vehicle-width direction. To facilitate understanding, the displacement of the axle 4 is exaggeratingly illustrated in FIG. 3 and FIG. 5.

The technology disclosed in the present specification can be applied to a battery electric vehicle including at least one motor that is supported by the suspension together with the axle and that drives the axle. The "battery electric vehicle" disclosed in the present specification is also called an electrified vehicle, and can include a hybrid electric vehicle including an engine in addition to the above motor. Further, the "battery electric vehicle" disclosed in the present specification can include a fuel cell electric vehicle including a fuel cell that supplies electric power to the motor.

## Claims

1. A battery electric vehicle (2; 102) comprising:
an axle (4) that extends in a vehicle-width direction;
a motor (5) that is coupled to the axle (4), the motor (5) being configured to drive the axle (4);
a suspension (10; 110) that supports the axle (4) and the motor (5), the suspension (10; 110) being configured to cause the axle (4) and the motor (5) to swing along a circular arc when viewed in the vehicle-width direction;
an inverter (6) that is fixed to a chassis (3a; 3b), the inverter (6) being configured to supply electric power to the motor (5);
a power cable (7) that connects the inverter (6) and the motor (5);
**characterized in**
a support bracket (21) that supports the power cable (7), the support bracket (21) being configured to swing together with the motor (5), wherein
the power cable (7) is supported by the support bracket (21), at a position that is closer to a center (Pv) of the circular arc than a position of half of a radius of the circular arc is when viewed in the vehicle-width direction.

2. The battery electric vehicle (2; 102) according to claim 1, wherein the center (Pv) of the circular arc is a coupling point of the suspension (10; 110) to the chassis (3a; 3b).

3. The battery electric vehicle (2) according to claim 2, further comprising a trailing arm (11) that couples the axle (4) and the suspension (10), wherein
a point where the trailing arm (11) is coupled to the suspension (10) coincides with the coupling point.

4. The battery electric vehicle (102) according to claim 2, further comprising a leaf spring (111) that couples the suspension (110) and the chassis (3a), the leaf spring (111) being constituted by a plurality of laminated plates having elasticity, wherein
a point where the leaf spring (111) is coupled to the suspension (110) coincides with the coupling point.

5. The battery electric vehicle (2; 102) according to any one of claims 2 to 4, wherein the support bracket (21) extends from the motor (5) toward the center (Pv) when the chassis (3a; 3b) is viewed in the vehicle-width direction.

6. The battery electric vehicle (2; 102) according to any one of claims 1 to 5, wherein the power cable (7) extends in the vehicle-width direction between the support bracket (21) and the inverter (6), is orthogonally bent at the support bracket (21), and extends in a chassis (3a; 3b) front-rear direction between the support bracket (21) and the motor (5).

## Patentansprüche

1. Batterieelektrisches Fahrzeug (2; 102), umfassend:
eine Achse (4), die sich in einer Fahrzeugbreitenrichtung erstreckt;
einen Motor (5), der mit der Achse (4) gekoppelt ist, wobei der Motor (5) dazu ausgelegt ist, die Achse (4) anzutreiben;
eine Aufhängung (10; 110), die die Achse (4) und den Motor (5) stützt, wobei die Aufhängung (10; 110) dazu ausgelegt ist, zu bewirken, dass die Achse (4) und der Motor (5) bei Ansicht in der Fahrzeugbreitenrichtung entlang eines Kreisbogens schwenken;
einen Wechselrichter (6), der an einem Fahrgestell (3a; 3b) befestigt ist, wobei der Wechselrichter (6) dazu ausgelegt ist, dem Motor (5) elektrische Leistung zuzuführen;
ein Leistungskabel (7), das den Wechselrichter (6) und den Motor (5) verbindet; **gekennzeichnet durch**
eine Stützhalterung (21), die das Leistungskabel (7) stützt, wobei die Stützhalterung (21) dazu ausgelegt ist, zusammen mit dem Motor (5) zu schwenken, wobei
das Leistungskabel (7) von der Stützhalterung (21) an einer Position gestützt wird, die bei Ansicht in der Fahrzeugbreitenrichtung näher an einem Mittelpunkt (Pv) des Kreisbogens liegt als eine Position der Hälfte eines Radius des Kreisbogens.

2. Batterieelektrisches Fahrzeug (2; 102) nach Anspruch 1, wobei der Mittelpunkt (PV) des Kreisbogens ein Kopplungspunkt der Aufhängung (10; 110) mit dem Fahrgestell (3a; 3b) ist.

3. Batterieelektrisches Fahrzeug (2) nach Anspruch 2, ferner umfassend einen Längslenker (11), der die Achse (4) und die Aufhängung (10) koppelt, wobei
sich ein Punkt, an dem der Längslenker (11) mit der Aufhängung (10) gekoppelt ist, mit dem Kopplungspunkt deckt.

4. Batterieelektrisches Fahrzeug (102) nach Anspruch 2, ferner umfassend eine Blattfeder (111), die die Aufhängung (110) und das Fahrgestell (3a) koppelt, wobei die Blattfeder (111) aus einer Mehrzahl von laminierten Platten mit Elastizität besteht, wobei
sich ein Punkt, an dem die Blattfeder (111) mit der Aufhängung (110) gekoppelt ist, mit dem Kopplungspunkt deckt.

5. Batterieelektrisches Fahrzeug (2; 102) nach einem der Ansprüche 2 bis 4, wobei sich die Stützhalterung (21) bei Ansicht des Fahrgestells (3a; 3b) in der Fahrzeugbreitenrichtung von dem Motor (5) zum Mittelpunkt (Pv) hin erstreckt.

6. Batterieelektrisches Fahrzeug (2; 102) nach einem der Ansprüche 1 bis 5, wobei sich das Leistungskabel (7) in der Fahrzeugbreitenrichtung zwischen der Stützhalterung (21) und dem Wechselrichter (6) erstreckt, an der Stützhalterung (21) rechtwinklig gebogen ist und sich in einer Richtung des Fahrgestells (3a; 3b) von vorne nach hinten zwischen der Stützhalterung (21) und dem Motor (5) erstreckt.

## Revendications

1. Véhicule électrique à batterie (2 ; 102) comprenant :
un essieu (4) qui s'étend dans le sens de la largeur du véhicule ;
un moteur (5) accouplé à l'essieu (4), le moteur (5) étant conçu pour entraîner l'essieu (4) ;
une suspension (10 ; 110) qui supporte l'essieu (4) et le moteur (5), la suspension (10 ; 110) étant conçue pour faire pivoter l'essieu (4) et le moteur (5) le long d'un arc de cercle lorsqu'ils sont observés dans le sens de la largeur du véhicule ;
un onduleur (6) qui est fixé à un châssis (3a ; 3b), l'onduleur (6) étant conçu pour fournir de l'énergie électrique au moteur (5) ;
un câble d'alimentation (7) qui connecte l'onduleur (6) et le moteur (5) ; **caractérisé par**
un support (21) qui supporte le câble d'alimentation (7), le support (21) étant conçu pour pivoter avec le moteur (5), dans lequel
le câble d'alimentation (7) est supporté par le support (21), à une position qui est plus proche d'un centre (Pv) de l'arc de cercle qu'une position de la moitié d'un rayon de l'arc de cercle lorsqu'on regarde dans le sens de la largeur du véhicule.

2. Véhicule électrique à batterie (2 ; 102) selon la revendication 1, dans lequel le centre (Pv) de l'arc de cercle est un point d'accouplement de la suspension (10 ; 110) au châssis (3a ; 3b).

3. Véhicule électrique à batterie (2) selon la revendication 2, comprenant en outre un bras arrière (11) qui accouple l'essieu (4) et la suspension (10), dans lequel
un point où le bras arrière (11) est accouplé à la suspension (10) coïncide avec le point d'accouplement.

4. Véhicule électrique à batterie (102) selon la revendication 2, comprenant en outre un ressort à lame (111) qui accouple la suspension (110) et le châssis (3a), le ressort à lame (111) étant constitué par une pluralité de plaques stratifiées présentant une élasticité, dans lequel
un point où le ressort à lame (111) est accouplé à la suspension (110) coïncide avec le point d'accouplement.

5. Véhicule électrique à batterie (2 ; 102) selon l'une quelconque des revendications 2 à 4, dans lequel le support (21) s'étend depuis le moteur (5) vers le centre (Pv) lorsque le châssis (3a ; 3b) est observé dans le sens de la largeur du véhicule.

6. Véhicule électrique à batterie (2 ; 102) selon l'une quelconque des revendications 1 à 5, dans lequel le câble d'alimentation (7) s'étend dans le sens de la largeur du véhicule entre le support (21) et l'onduleur (6), est courbé orthogonalement au niveau du support (21), et s'étend dans le sens avant-arrière du châssis (3a ; 3b) entre le support (21) et le moteur (5).
